# FASCICULE DE BREVET EUROPEEN

(11) **EP 0 412 020 B1**
(45) Date de publication et mention de la délivrance du brevet: **08.03.1995**
(21) Numéro de dépôt: 90402237.3
(22) Date de dépôt: 03.08.1990
(51) Int. Cl.: G06F 17/60

(54) **Procédé et dispositif pour la gestion des bacs pour la collecte de déchets**
Verfahren und Apparat zur Verwaltung von Müllbehältern
Method and apparatus for the management of containers for rubbish collection

(30) Priorité: 04.08.1989 FR 8910543
(43) Date de publication de la demande: 06.02.1991
(73) Titulaire: COMPAGNIE PLASTIC OMNIUM Société Anonyme dite:, 69007 Lyon (FR)
(72) Inventeur: Chicher, Pierre, 78600 Mesnil le Roi (FR); Tumelaire, Charles, F-78124 Mareil sur Mauldre (FR)
(74) Mandataire: Nony, Michel

(56) Documents cités:
- EP-A- 0 141 070
- EP-A- 0 142 436
- EP-A- 0 186 820
- US-A- 4 554 955

## Description

La présente invention a pour objet un nouveau procédé pour assurer la gestion des bacs pour la collecte des déchets et un dispositif pour la mise en oeuvre de ce procédé.

On sait que l'on utilise actuellement pour la collecte des déchets, en particulier urbains, des bacs ou conteneurs qui sont mis à la disposition des usagers et qui sont vidés quotidiennement par un organisme spécialisé.

Pour des raisons de bonne gestion il est nécessaire, d'une part d'identifier les bacs en indiquant à la disposition de qui ils sont mis, et d'autre part de tenir une comptabilité des bacs qui sont vidés chaque jour du fait que l'évacuation des déchets est facturée en fonction de son volume.

De surcroît, dans le but de faciliter la récupération de certains produits tels que le verre ou les métaux, il est intéressant de pouvoir différencier les différents conteneurs et d'éviter qu'un bac contenant des déchets d'une nature particulière soit déversé dans une benne contenant des déchets d'une autre nature.

Enfin, il est intéressant pour une bonne gestion du parc de bacs de pouvoir procéder à l'inspection périodique en identifiant ceux qui présentent des défauts ou des débuts de détérioration.

Dans l'état actuel de la technique, les bacs sont généralement identifiés par des étiquettes auto-collantes qui portent les inscriptions nécessaires.

On connait, du document EP-A-0 186 820, un dispositif pour la gestion des bacs pour la collecte de déchets, dans lequel d'une part chaque bac est muni d'une étiquette d'identification qui comporte des informations relatives au bac et d'autre part un dispositif de lecture est prévu sur une benne de collecte pour lire les informations inscrites sur l'étiquette lors du basculement d'un bac et pour envoyer lesdites informations dans une mémoire centrale.

Par ailleurs, il est connu du document EP-A-0 142 436 de fixer une étiquette électronique sur un objet soumis à un processus industriel dans une chaîne de production, ladite étiquette comportant une mémoire inscriptible et effaçable, un circuit émetteur et un circuit récepteur, grâce auxquels l'étiquette peut échanger des informations avec un organe de transmission fixe, lorsque ce dernier se trouve à proximité de l'étiquette.

La présente invention a pour objet un nouveau procédé de gestion des bacs de collecte des déchets qui permet de résoudre d'une manière simple et économique les problèmes qui se posent dans la pratique.

La présente invention a pour objet un procédé pour la gestion des bacs pour la collecte des déchets selon la revendication 1.

Dans un mode de réalisation préféré la mémoire du microprocesseur est non volatile.

Dans un mode de mise en oeuvre préféré du procédé selon l'invention, le microprocesseur ne comporte pas d'alimentation électrique et l'énergie nécessaire à la mise en mémoire ou à la lecture des informations contenues dans le microprocesseur est fournie par le dispositif d'envoi ou de lecture grâce à l'émission d'un rayonnement haute fréquence, d'un rayonnement laser ou d'un rayonnement infrarouge par exemple.

Dans un mode de réalisation particulier de l'invention, la lecture des informations contenues dans le microprocesseur est obtenue de manière automatique à l'aide d'un dispositif de lecture qui est placé sur la benne de collecte à un endroit voisin de la trajectoire du microprocesseur lors du basculement du bac.

Grâce à ce procédé, il est possible de décompter automatiquement le nombre et la taille des bacs qui ont été déversés dans la benne. Il est également possible de faire en sorte que lorsqu'un bac est affecté à la collecte de déchets d'une nature particulière, par exemple du verre, ce bac ne puisse être déversé dans une benne destinée à collecter des déchets d'une autre nature. Ce contrôle peut être réalisé en interdisant le basculement du bac dans la benne lorsque l'identification des déchets contenus dans le bac ne correspond pas à la nature des déchets qui est inscrite dans la mémoire centrale d'un ordinateur porté par la benne.

Le procédé selon l'invention permet avec des véhicules de collecte comportant plusieurs compartiments de réception des déchets, de déverser automatiquement les bacs dans les compartiments correspondant à la nature des déchets qu'ils contiennent. Ce procédé s'applique également à l'utilisation de bacs comportant plusieurs compartiments destinés à recevoir des déchets de natures différentes.

Dans un autre mode de mise en oeuvre, la lecture des informations contenues dans le microprocesseur peut être réalisée lors d'une inspection visuelle des bacs qui permet de déterminer ceux qui sont avariés ou qui présentent un début de dégradation. Au cours de cette inspection, il est possible d'introduire dans la mémoire du microprocesseur des informations contenant l'état du bac et d'introduire dans la mémoire du lecteur les caractéristiques du bac et les informations concernant son état.

On peut ainsi procéder de manière simple et efficace à une gestion particulièrement fine d'un parc de bacs pour la collecte des déchets.

La présente invention a également pour objet un dispositif pour la gestion des bacs pour la collecte des déchets selon la revendication.

Dans un mode de réalisation particulier de l'invention, l'énergie nécessaire à l'enregistrement ou à la lecture des informations dans le microprocesseur est obtenue grâce à un organe sensible solidaire du microprocesseur qui reçoit une énergie émise par le dispositif de lecture qui émet un rayonnement à haute fréquence, un rayonnement laser ou un rayonnement infrarouge dont la modulation sert à la fois pour fournir au microprocesseur l'énergie nécessaire à son fonctionnement et à échanger avec le microprocesseur les informations que ce dernier reçoit ou émet.

Selon un mode de réalisation préféré de l'invention, le microprocesseur est contenu dans une plaquette de faible dimension qui est fixée de préférence sur la paroi externe du bac à un endroit où il est relativement peu exposé.

## Revendications

1. Procédé pour la gestion des bacs pour la collecte des déchets, selon lequel on appose sur chaque bac un moyen d'identification comportant des informations relatives au bac; on lit lesdites informations contenues dans le moyen d'identification lors du basculement du bac dans une benne de collecte ou lors d'une inspection individuelle des bacs; et l'on envoie lesdites informations dans une première mémoire centrale permettant d'assurer la gestion des bacs, caractérisé par le fait que l'on appose sur chaque bac, comme moyen d'identification, un microprocesseur qui comporte une deuxième mémoire, un premier moyen permettant d'introduire des informations dans ladite deuxième mémoire et un deuxième moyen permettant de lire lesdites informations contenues dans la deuxième mémoire; et que l'on introduit dans ladite deuxième mémoire les informations désirées relatives au bac.

2. Procédé selon la revendication 1, caractérisé par le fait que la deuxième mémoire est non volatile.

3. Procédé selon l'une quelconque des revendications précédentes, caractérisé par le fait que l'énergie nécessaire au microprocesseur pour la mise en mémoire et la lecture des informations contenues dans cette deuxième mémoire est fournie par un dispositif d'envoi ou de lecture grâce à l'émission d'un rayonnement haute fréquence, d'un rayonnement laser, ou d'un rayonnement infrarouge par exemple.

4. Procédé selon l'une quelconque des revendications précédentes, caractérisé par le fait que les informations contenues dans le microprocesseur sont lues de manière automatique à l'aide d'un dispositif de lecture placé sur la benne de collecte à un endroit voisin de la trajectoire du microprocesseur lors du basculement du bac.

5. Procédé selon l'une quelconque des revendications précédentes, caractérisé par le fait qu'il est utilisé pour décompter automatiquement le nombre et la taille des bacs qui sont déversés dans la benne.

6. Procédé selon l'une quelconque des revendications 4 et 5, caractérisé par le fait que l'on utilise une information contenue dans la deuxième mémoire du microprocesseur qui indique la nature des déchets contenus dans le bac pour interdire le basculement du bac si ces informations ne correspondent pas aux informations correspondantes qui sont contenues dans la première mémoire centrale d'un ordinateur porté par la benne.

7. Procédé selon l'une quelconque des revendications précédentes, caractérisé par le fait que l'on utilise une information contenue dans la deuxième mémoire du microprocesseur pour déterminer le compartiment d'un véhicule de collecte à plusieurs compartiments, dans lequel le contenu du bac est déversé.

8. Procédé selon la revendication 7, caractérisé par le fait que l'on utilise un bac comportant plusieurs compartiments pour recevoir des déchets de natures différentes.

9. Procédé selon l'une quelconque des revendications 1 à 4, caractérisé par le fait que lors d'une inspection visuelle des différents bacs on procède à la lecture des informations contenues dans le microprocesseur et/ou l'on introduit dans la deuxième mémoire du microprocesseur des informations concernant les caractéristiques et l'état du bac.

10. Dispositif pour la gestion des bacs pour la collecte des déchets pour la mise en oeuvre du procédé selon l'une quelconque des revendications 1 à 9, le dispositif comportant:
- un moyen d'identification apposé sur chaque bac, le moyen d'identification comportant des informations relatives au bac,
- une première mémoire centrale permettant d'assurer la gestion des bacs,
- un dispositif de lecture des informations contenues dans le moyen d'identification qui peut être placé au voisinage du trajet du moyen d'identification lors du basculement du bac dans une benne de collecte ou lors d'une inspection individuelle des bacs et qui envoie lesdites information dans la première mémoire centrale,
caractérisé par le fait que le dispositif comporte en combinaison :
- un microprocesseur comme moyen d'identification solidaire de chacun des bacs de collecte des déchets, ledit microprocesseur comportant une deuxième mémoire, de préférence non volatile, un premier moyen pour introduire des informations dans la deuxième mémoire, et un deuxième moyen pour lire les informations contenues dans la deuxième mémoire.

11. Dispositif selon la revendication 10, caractérisé par le fait que l'énergie nécessaire à l'enregistrement ou à la lecture des informations contenues dans le microprocesseur est obtenue grâce à un organe sensible solidaire du microprocesseur qui reçoit une énergie émise par le dispositif de lecture qui émet un rayonnement à haute fréquence, un rayonnement laser ou un rayonnement infrarouge dont la modulation sert à la fois pour fournir au microprocesseur l'énergie nécessaire à son fonctionnement et à échanger avec le microprocesseur des informations que ce dernier reçoit ou émet.

12. Dispositif selon l'une quelconque des revendications précédentes, caractérisé par le fait qu'il se présente sous la forme d'une plaquette de faible dimension fixée sur la paroi externe du bac à un endroit où il est relativement peu exposé.

## Patentansprüche

1. Verfahren zur Verwaltung von Müll-Sammelbehältern, bei dem man an jedem Behälter eine Identifizierungseinrichtung anbringt, die Informationen über den Behälter enthält, diese in der Identifizierungseinrichtung enthaltenen Informationen beim Auskippen des Behälters in ein Müll-Sammelfahrzeug oder bei einer Einzelinspektion der Behälter liest und diese Informationen an einen zentralen ersten Speicher übermittelt, der die Verwaltung der Behälter gestattet, dadurch gekennzeichnet, daß man an jedem Behälter als Identifizierungseinrichtung einen Mikroprozessor anbringt, der einen zweiten Speicher, eine erste Einrichtung zur Eingabe der Informationen in den genannten zweiten Speicher und eine zweite Einrichtung zum Lesen der in dem zweiten Speicher enthaltenen Informationen aufweist, und daß man die gewünschten Informationen über den Behälter in den genannten zweiten Speicher eingibt.

2. Verfahren nach Anspruch 1, dadurch gekennzeichnet, daß der zweite Speicher ein nichtflüchtiger Speicher ist.

3. Verfahren nach einem der vorstehenden Ansprüche, dadurch gekennzeichnet, daß die von dem Mikroprozessor zum Speichern und zum Lesen der in dem zweiten Speicher enthaltenen Informationen benötigte Energie durch eine Einrichtung zum Senden oder Lesen, beispielsweise durch Abstrahlung einer Hochfrequenzstrahlung, einer Laserstrahlung oder einer Infrarotstrahlung geliefert wird.

4. Verfahren nach einem der vorstehenden Ansprüche, dadurch gekennzeichnet, daß die in dem Mikroprozessor enthaltenen Informationen automatisch mit Hilfe einer Leseeinrichtung gelesen werden, die an dem Müllfahrzeug an einer Stelle angebracht ist, die der Bewegungsbahn des Mikroprozessors beim Auskippen des Behälters benachbart ist.

5. Verfahren nach einem der vorstehenden Ansprüche, dadurch gekennzeichnet, daß es zur automatischen Abrechnung der Anzahl und der Größe der in das Müllfahrzeug entleerten Behälter benutzt wird.

6. Verfahren nach Anspruch 4 oder 5, dadurch gekennzeichnet, daß man eine in dem zweiten Speicher des Mikroprozessors enthaltene Information, die die Art der in dem Behälter enthaltenen Abfälle angibt, dazu benutzt, die Kippbewegung des Behälters zu sperren, wenn diese Informationen nicht mit entsprechenden Informationen kompatibel sind, die im zentralen ersten Speicher eines durch das Müllfahrzeug mitgeführten Rechners enthalten sind.

7. Verfahren nach einem der vorstehenden Ansprüche, dadurch gekennzeichnet, daß man eine in dem zweiten Speicher des Mikroprozessors enthaltene Information dazu benutzt, das Abteil eines Sammelfahrzeugs mit mehreren Abteilen zu bestimmen, in welches der Inhalt des Behälters entleert wird.

8. Verfahren nach Anspruch 7, dadurch gekennzeichnet, daß man einen Behälter mit mehreren Abteilen zur Aufnahme von Abfällen unterschiedlicher Art verwendet.

9. Verfahren nach einem der Ansprüche 1 bis 4, dadurch gekennzeichnet, daß man bei einer visuellen Überprüfung verschiedener Behälter die in dem Mikroprozessor enthaltenen Informationen liest und/oder Informationen betreffend die Kenndaten und den Zustand des Behälters in den zweiten Speicher des Mikroprozessors eingibt.

10. Apparat zur Verwaltung von Müll-Sammelbehältern, zur Durchführung des Verfahrens nach einem der Ansprüche 1 bis 9, welcher Apparat aufweist:
- eine an jedem Behälter angebrachte Identifizierungseinrichtung, die Informationen über den Behälter enthält,
- einen zentralen ersten Speicher, der die Verwaltung der Behälter gestattet,
- eine Einrichtung zum Lesen der in der Identifizierungseinrichtung enthaltenen Informationen, die in der Nähe der Bewegungsbahn der Identifizierungseinrichtung beim Auskippen des Behälters in ein Sammelfahrzeug oder bei einer Einzelinspektion der Behälter angebracht werden kann und diese Informationen in den zentralen ersten Speicher übermittelt, dadurch gekennzeichnet, daß der Apparat in Kombination aufweist:
- einen an jedem der Müll-Sammelbehälter angebrachten Mikroprozessor als Identifizierungseinrichtung, welcher Mikroprozessor einen zweiten, vorzugsweise nichtflüchtigen Speicher, eine erste Einrichtung zum Eingeben der Informationen in den zweiten Speicher und eine zweite Einrichtung zum Lesen der in dem zweiten Speicher enthaltenen Informationen aufweist.

11. Apparat nach Anspruch 10, dadurch gekennzeichnet, daß die zur Speicherung oder zum Lesen der in dem Mikroprozessor enthaltenen Informationen benötigte Energie durch einen an dem Mikroprozessor vorgesehenen Empfänger geliefert wird, der Energie empfängt, die von der Leseeinrichtung emittiert wird, die eine Hochfrequenzstrahlung, eine Laserstrahlung oder eine Infrarotstrahlung emittiert, deren Modulation zugleich die für den Betrieb des Mikroprozessors nötige Energie an den Mikroprozessor liefert und zum Austausch der Informationen mit dem Mikroprozessor dient, die dieser empfängt oder sendet.

12. Apparat nach einem der vorstehenden Ansprüche, dadurch gekennzeichnet, daß er die Form einer Plakette mit kleinen Abmessungen aufweist, die an einer Außenwand des Behälters an einer relativ wenig exponierten Stelle befestigt ist.

## Claims

1. Method for the management of containers for rubbish collection, according to which there is fitted to each container an identification means containing information relative to the container, said information contained in the identification means is read during the tipping of the container into a collecting skip or during an individual inspection of the containers, and said information is fed into a first central memory making possible the management of the containers, characterized by the fact that there is fitted to each container, as identifying means, a microprocessor which comprises a second memory, a first means enabling the information to be introduced into said second memory and a second means enabling said information contained in the second memory to be read, and that the desired information relative to the container is introduced into said second memory.

2. Method according to Claim 1, characterized by the fact that the second memory is non-volatile.

3. Method according to any one of the preceding Claims, characterized by the fact that the energy necessary for the microprocessor for the storage and reading of the information contained in this second memory is supplied by a transmission or reading device by means of the emission of a high-frequency radiation, a laser radiation, or an infrared radiation, for example.

4. Method according to any one of the preceding Claims, characterized by the fact that the information contained in the microprocessor is read automatically by means of a reading device mounted on the collecting skip at a position in the vicinity of the path of the microprocessor during the tipping of the container.

5. Method according to any one of the preceding Claims, characterized by the fact that it is used for automatically counting down the number and size of the containers that are tipped into the skip.

6. Method according to any one of Claims 4 and 5, characterized by the fact that an information item contained in the second memory of the microprocessor is used, which indicates the nature of the waste contained in the container for the purpose of forbidding the tipping of the container if this information does not correspond to the corresponding information contained in the first central memory of a computer carried by the skip.

7. Method according to any one of the preceding Claims, characterized by the fact that an information item contained in the second memory of the microprocessor is used for determining the compartment of a collecting vehicle having several compartments, into which the contents of the container are tipped.

8. Method according to Claim 7, characterized by the fact that a container comprising several compartments for receiving wastes of different types is used.

9. Method according to any one of Claims 1 to 4, characterized by the fact that, during a visual inspection of the different containers, the information contained in the microprocessor is read and/or there is introduced, into the second memory of the microprocessor, information relating to the characteristics and state of the container.

10. Apparatus for the management of containers for rubbish collection, for carrying out the method according to any one of Claims 1 to 9, the apparatus comprising:
- an identification means fitted to each container, the identification means comprising information relative to the container,
- a first central memory making possible the management of the containers,
- a device for reading the information contained in the identification means, which device may be placed in the vicinity of the path of the identification means during the tipping of the container into a collecting skip or during an individual inspection of the containers and which feeds said information into the first central memory, characterized by the fact that the device comprises in combination:
- a microprocessor as identification means fitted to each of the collecting containers for rubbish collection, said microprocessor containing a second memory, preferably non-volatile memory, a first means for introducing information into the second memory and a second means for reading the information contained in the second memory.

11. Apparatus according to Claim 10, characterized by the fact that the energy necessary for the recording or the reading of the information contained in the microprocessor is obtained by means of a sensitive element fixed to the microprocessor, which receives energy emitted by the reading device, which emits a high-frequency radiation, a laser radiation or an infrared radiation, the modulation of which serves both for supplying the microprocessor with the energy necessary for its operation and for exchanging with the microprocessor information which the latter receives or transmits.

12. Apparatus according to any one of the preceding Claims, characterized by the fact that it is present in the form of a plate of small dimensions, fixed to the outer wall of the container at a position at which it is not much exposed.
